# EUROPEAN PATENT SPECIFICATION

(11) **EP 3 101 300 B1**
(45) Date of publication and mention of the grant of the patent: **09.05.2018**
(21) Application number: 16172166.7
(22) Date of filing: 31.05.2016
(51) Int. Cl.: F16D 48/06

(54) **CLUTCH CHARACTERISTIC LEARNING APPARATUS**
KUPPLUNGSEIGENSCHAFTSLERNVORRICHTUNG
APPAREIL D'APPRENTISSAGE DE CARACTÉRISTIQUES D'EMBRAYAGE

(30) Priority: 01.06.2015 JP 2015111544
(43) Date of publication of application: 07.12.2016
(73) Proprietor: AISIN SEIKI KABUSHIKI KAISHA, Kariya-shi, Aichi 448-8650 (JP)
(72) Inventor: ANDO, Fumiya, Nagoya-shi, Aichi 4500002 (JP); HARADA, Shinya, Kariya-shi, Aichi 448-8650 (JP)
(74) Representative: Kramer Barske Schmidtchen Patentanwälte PartG mbB

(56) References cited:
- EP-A1- 2 194 287
- WO-A1-2015/120850
- DE-A1-102009 029 414
- US-A1- 2013 317 683

## Description

### TECHNICAL FIELD

This disclosure relates to a clutch characteristic learning apparatus for learning a clutch characteristic.

### BACKGROUND DISCUSSION

In the related art, a technology of learning a clutch characteristic is known. In a learning apparatus for a vehicle of JP 2012-86596A (Reference 1), as a clutch characteristic, a relationship between a clutch stroke of an operation member (that is, a moving amount of the operation member) for operating a clutch and a point (touch point) for initiating transmitting of torque by the clutch is learned. Therefore, in the learning apparatus for a vehicle of Reference 1, at the time of travelling with a motor generator which is provided at an output shaft of a transmission, the clutch is completely cut by driving an engine. In addition, as the transmission enters a neutral state, the clutch is gradually connected, and a point, in which the number of rotations of an input shaft of the transmission becomes greater than zero and the torque is initiated to be transmitted, is detected as the touch point.

In addition, in a correction method of a clutch characteristic of JP 2010-105649A (Reference 2), an error is checked by comparing an estimating value of a clutch transmission torque estimated from engine friction torque and a clutch transmission torque prediction value read from a clutch characteristic map for controlling using a difference between the numbers of rotations of the clutch at the time of estimating the clutch transmission torque (a difference of the number of rotations between the engine and the motor generator) and a clutch control hydraulic pressure. At this time, based on the difference between the number of rotations of the motor generator and the number of rotations of the engine, one of a plurality of clutch transmission torque characteristic maps stored in advance in a memory is selected and used as a map for controlling, and the clutch transmission torque characteristic map, in which a torque value in the differences of the number of rotations is the closest to the clutch transmission torque, is selected.

However, according to the learning apparatus for a vehicle of Reference 1, as the clutch characteristic, the touch point can be learned; however, a relationship between a stroke and torque from the touch point to an engagement side end point where the stroke becomes a maximum value cannot be learned and corrected.

In addition, in the correction method of the clutch characteristic of Reference 2, it is necessary that the plurality of clutch transmission torque characteristic maps are provided in advance, and a capacity of a ROM or a RAM is compressed. In addition, an actual clutch transmission torque does not necessarily match any one of the characteristics of the plurality of characteristic maps registered in advance.

DE 10 2009 029 414 A1 relates to a method for improving the accuracy of a coupling torque of a clutch in an automated clutch system in a motor vehicle. An electromechanical actuator executes a predefined actuator travel distance and thus sets the coupling torque of a clutch by way of a hydraulic line system. In order to ensure the torque accuracy even after abruptly changing system properties of the clutch, a parameter representing the state of the clutch is monitored while the clutch is closed and, after exceeding a predefined value of the parameter, a corrective value is applied to the current actuated travel distance upon re-closing of the clutch.

US 2013/0317683 A1 discloses a transmission control device for a hybrid vehicle, in which, when an engine torque is equal to or less than a predetermined value during a constant speed travelling, a learning engine rotational speed is set to a rotational speed being higher than the present engine rotational speed.

WO 2015/120850 A1 relates to a method for determining a characteristic curve of a clutch of a clutch activation system in a drivetrain, wherein a bite point of the clutch is adapted as a first support point of the characteristic curve.

EP 2 194 287 A1 discloses a method of controlling a friction clutch in a motor-vehicle transmission.

### SUMMARY

Thus, a need exists for a clutch characteristic learning apparatus which is capable of learning a characteristic of a clutch using a motor torque regardless of a position of a stroke.

A clutch characteristic learning apparatus of a hybrid vehicle according to an aspect of this disclosure includes an engine, a clutch that transmits engine torque from the engine as clutch transmission torque according to a stroke amount of an operation member with respect to an input shaft of a transmission, a motor generator that is capable of outputting motor torque to the input shaft or an output shaft of the transmission, and a controller that varies the stroke amount, in a state in which the motor torque is output to the input shaft side by the motor generator and the input shaft is controlled at a constant number of rotations by the motor generator, and generates a torque map of the clutch transmission torque and the stroke amount of the operation member, based on a relationship between the stroke amount when being varied and an amount of change of the motor torque.

According to the configuration, in a case in which the motor generator outputs the motor torque to the input shaft side and the engine is stopped by controlling a constant number of rotations, if the transmission torque of the clutch is increased by changing the stroke amount of the operation member, the motor torque, which is necessary for rotating the input shaft at the constant number of rotations, is increased. Increasing of the motor torque reflects increasing of the clutch transmission torque. Accordingly, based on a relationship between the stroke amount when changing the stroke amount of the operation member and the amount of change of the motor torque, the torque map indicating the relationship between the stroke amount and the clutch transmission torque of the operation member of the clutch can be obtained. In addition, since the clutch transmission torque is obtained by the amount of change of the motor torque, regardless of a stroke position, the torque map indicating a relationship between the stroke amount and the clutch transmission torque regarding an arbitrary stroke amount can be obtained.

In the clutch characteristic learning apparatus, the controller may generate the torque map with a value which is obtained by subtracting the motor torque at the time of completely cutting the clutch from the motor torque corresponding to the stroke amount, as the transmission torque corresponding to the stroke amount.

The motor torque at the time of completely cutting the clutch is torque which is necessary for rotating the input shaft at the constant number of rotations, without reflecting the clutch transmission torque. Accordingly, according to the configuration described above, regarding each stroke amount, the clutch transmission torque can be obtained by subtracting a torque, which is necessary for rotating the input shaft at the constant number of rotations, from the motor torque.

In the clutch characteristic learning apparatus, the controller may estimate the motor torques based on a current supplied to the motor generator.

According to the configuration described above, the motor torque can be acquired with a simple configuration without using a torque sensor.

In the clutch characteristic learning apparatus, the controller may generate the torque map by acquiring the motor torques regarding a plurality of predetermined stroke amounts and obtaining the transmission torques corresponding to the stroke amount for which the motor torque is not obtained by interpolation.

According to the configuration described above, even in a case in which the motor torque is acquired regarding a plurality of discrete stroke amounts, the torque map in which the transmission torque corresponding to an arbitrary stroke amount is regulated can be obtained.

In the clutch characteristic learning apparatus, the controller may acquire the motor torques regarding the plurality of predetermined stroke amounts and adopt the motor torques regarding each of the plurality of predetermined stroke amounts for generating the torque map when the motor torques are stabilized.

According to the configuration described above, even in a case in which the motor torque for maintaining the input shaft at the constant number of rotations is changed by changing the stroke amount, the motor torque corresponding to each stroke amount in order to maintain the input shaft at the constant number of rotations can be acquired.

In the clutch characteristic learning apparatus, the controller may generate the torque map at the time of starting the engine, and change the stroke amount so as to gradually output the engine torque to the input shaft.

According to the configuration described above, the engine can be rotated up to the number of rotations capable of starting the engine using the motor torque, and the torque map can be generated whenever starting the engine.

A hybrid vehicle according to an aspect of this disclosure includes an engine, a clutch that transmits engine torque from the engine as clutch transmission torque according to a stroke amount of an operation member with respect to an input shaft of a transmission, a motor generator that is capable of outputting motor torque to the input shaft or an output shaft of the transmission, and the clutch characteristic learning apparatus described above.

According to the configuration, in a case in which the motor generator outputs the motor torque to the input shaft side and the engine is stopped by controlling a constant number of rotations, if the transmission torque of the clutch is increased by changing the stroke amount, the motor torque, which is necessary for rotating the input shaft at the constant number of rotations, is increased. Increasing of the motor torque reflects increasing of the clutch transmission torque. Accordingly, based on a relationship between the stroke amount when changing the stroke amount and the motor torque, a torque map indicating the relationship between the stroke amount of the clutch and the clutch transmission torque can be obtained. In addition, since the clutch transmission torque is obtained by the amount of change of the motor torque, regardless of a stroke position, the torque map indicating a relationship between the stroke amount and the clutch transmission torque regarding an arbitrary stroke amount can be obtained.

The hybrid vehicle may further include a transmission including the input shaft, the output shaft, and a mechanism, which is shifted to a torque transmission state of being rotatedly connected to the input shaft at any one rotation rate of a plurality of rotation rates and a torque non-transmission state of not being rotatedly connected to the input shaft, and the clutch characteristic learning apparatus may acquire the stroke amount and the motor torque by controlling the constant number of rotations with respect to the motor generator and controlling the stroke amount, when the transmission is in a non-transmission state of a torque.

According to the configuration described above, the hybrid vehicle does not travel by the motor torque, and thus the clutch characteristic can be learned without affecting travelling of the hybrid vehicle.

According to the aspects of this disclosure, based on the relationship between the stroke amount and the motor torque when the stroke amount of the operation member of the clutch is changed, regardless of a stroke position, a relationship between the stroke amount and the transmission torque of the operation member of the clutch can be obtained.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating a system configuration of a hybrid vehicle of an embodiment of this disclosure;
Fig. 2 is a flow chart of learning of a clutch characteristic at the time of starting an engine of the embodiment of this disclosure;
Fig. 3 is an example of a timing chart in a case of carrying out the flow chart of the embodiment of this disclosure;
Fig. 4 is a flow chart of a subroutine of a motor torque stability determination of the embodiment of this disclosure; and
Fig. 5 is a graph illustrating an example of a torque map of the embodiment of this disclosure.

### DETAILED DESCRIPTION

Hereinafter, an embodiment disclosed here will be described with reference to drawings. Also, the embodiment to be described later is presented by way of an example in a case of carrying out this disclosure, and therefore, this disclosure is not limited to a specific example to be described later. In an execution of this disclosure, the specific example according to the embodiment may be appropriately adopted.

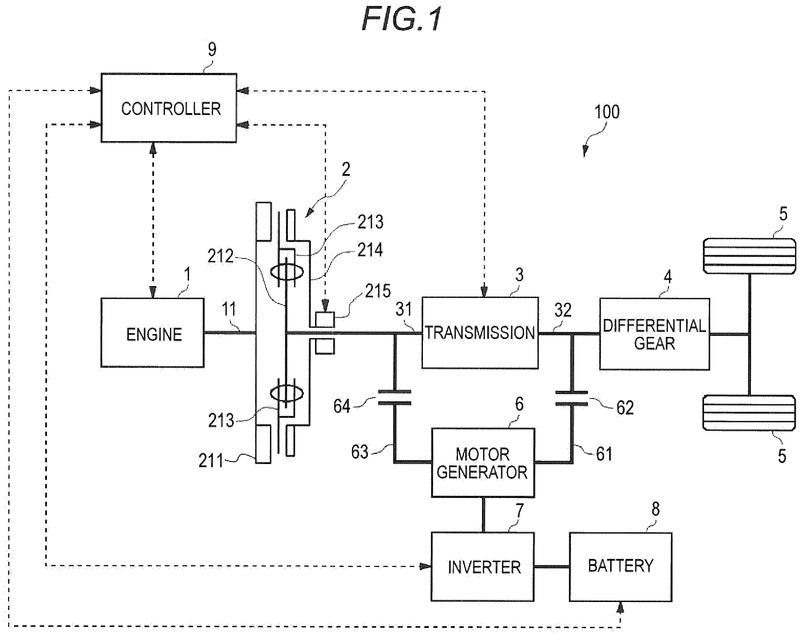

Fig. 1 is a view schematically illustrating a system configuration of a hybrid vehicle of an embodiment disclosed here. In Fig. 1, only configuration components which relate to a clutch characteristic learning apparatus among configuration components of the hybrid vehicle are illustrated. A hybrid vehicle 100 is provided with an engine 1 as an internal combustion engine, a clutch 2, a transmission 3, a differential device (differential gear) 4, tires 5, a motor generator 6, an inverter 7, a battery 8, and a controller 9.

The engine 1 is a driving source of the hybrid vehicle 100, and coverts and outputs combustion energy of fuel into rotational motion of a crankshaft 11 which is an output shaft. The crankshaft 11 is connected to an input shaft 31 of the transmission 3 through the clutch 2.

The clutch 2 is a dry clutch of a friction engagement type, and is disposed between the crankshaft 11 of the engine 1 and the input shaft 31 of the transmission 3. The clutch 2 is capable of controlling an engagement degree by a control amount which is input, and when the engagement degree is adjusted, the clutch enters three states of a connection state for transmitting power (rotational force or rotational torque) supplied from the engine 1 side, a cutting state of non-transmitting the power, and a sliding state of being in contact while sliding in an intermediate state between the connection state and the cutting state.

The clutch 2 includes a flywheel 211, a clutch disk 212, a pressure plate 213, a diaphragm spring 214, an operation member (for example, release bearing, plunger member) 215, and a clutch cover which is not illustrated, and the like. The clutch disk 212 and the pressure plate 213, and the flywheel 211 and the clutch disk 212 are respectively in contact with each other by energizing force of the diaphragm spring 214, so that friction force is generated. A state thereof becomes the connection state in which power is transmitted between the crankshaft 11 and the input shaft 31 through the clutch 2 by the friction force.

The controller 9 adjusts a contact degree of the clutch 2. Specifically, the controller 9 moves the operation member 215 on a left side of Fig. 1 and bends the diaphragm spring 214 on a left side of a shaft direction by increasing hydraulic pressure of a hydraulic actuator. Accordingly, the diaphragm spring 214 reduces pressing force of pressing the pressure plate 213, contacting between the clutch disk 212 and the pressure plate 213, and contacting between the flywheel 211 and the clutch disk 212 are respectively released. As a result, the clutch 2 becomes the cutting state through the sliding state.

In the connection state, the flywheel 211 and the clutch disk 212 are in contact with each other and integrally rotate at an equal number of rotations. In the sliding state, the flywheel 211 and the clutch disk 212 are in contact with each other, and integrally rotate at a different numbers of rotations. In the cutting state, the flywheel 211 and the clutch disk 212 are cut and the power is not transmitted. The operation member 215 driven by the hydraulic actuator is capable of controlling a transmission degree of the power in the sliding state of the clutch 2.

According to a magnitude of the pressing force when the diaphragm spring 214 presses the pressure plate 213, a maximum torque which can be transmitted in the clutch 2, that is, a torque capacity of the clutch 2 is changed. In the description as follows, a torque which can be transmitted by the clutch 2 is disclosed as a "clutch torque", and a moving amount in an axis direction of the operation member 215 which moves the diaphragm spring 214 by controlling the hydraulic pressure of the hydraulic actuator is defined as a stroke amount. In the clutch 2, the clutch torque can be controlled by adjusting the stroke amount.

The input shaft 31 of the transmission 3 is spline-engaged with the clutch disk 212 of the clutch 2. The transmission 3 includes a plurality of pairs of gears which are disconnectable. The output shaft 32 and the input shaft 31 selectively enter a torque transmission state in which the shafts are rotatedly connected to each other at a rotation ratio of a plurality of rotation ratios and a torque non-transmission state in which the shafts are not rotatedly connected to each other. The output shaft 32 of the transmission 3 is rotatedly connected to the differential device 4. A torque of the output shaft 32 is transmitted to the differential device 4, and the tires 5 are rotated.

In addition, a first shaft 61 of the motor generator 6 is rotatedly connected to the output shaft 32 of the transmission 3 through a first connecting section 62, and a second shaft 63 is rotatedly connected to the input shaft 31 of the transmission 3 through a second connecting section 64.

Each operation of the engine 1, the clutch 2, the transmission 3, the motor generator 6, the first connecting section 62, and the second connecting section 64 is controlled by the controller 9. Particularly, the controller 9 adjusts the stroke amount by instructing a start of the engine 1 and controlling the hydraulic pressure of the hydraulic actuator of the clutch 2, and in addition, the controller controls a shift transmission by the transmission 3, and controls connection and disconnection of the first connecting section 62 and the second connecting section 64.

According to the configuration described above, in a case in which the hybrid vehicle 100 is travelled using a torque of the engine 1, the clutch 2 is connected, and the torque of the engine 1 (hereinafter, refer to as "engine torque") is transmitted from the crankshaft 11 of the engine 1 to the input shaft 31 of the transmission 3. The transmission 3 shifts rotation of the input shaft 31 at any one ratio of a plurality of predetermined gear ratios, and rotates the output shaft 32.

Meanwhile, according to the configuration described above, in a case in which the hybrid vehicle 100 travels using torque of the motor generator 6 (hereinafter, referred to as "motor torque"), output of the motor generator 6 is input to the input shaft 31 of the transmission 3 by connecting the second connecting section 64, the rotation of the input shaft 31 is shifted at any one ratio of a plurality of predetermined gear ratios, and the output shaft 32 is rotated. Otherwise, output of the motor generator 6 can be directly output to the output shaft 32 of the transmission 3 by connecting the first connecting section 62.

The motor generator 6 is used for starting the engine 1. In this case, the motor torque is transmitted to the input shaft 31 by connecting the second connecting section 64, the input shaft 31 is rotated by the motor generator 6. Also, the crankshaft 11 of the engine 1 is rotated by connecting the clutch 2. Accordingly, the engine 1 can be started using the motor generator 6 as a starter motor.

In the embodiment, at the time of starting the engine 1 using the motor generator 6 as a starter motor as described above, a clutch characteristic is learned. An outline of leaning the clutch characteristic is as follows. In other words, before the clutch 2 is connected to the engine 1, the motor generator 6 makes the number of rotations of the input shaft 31 of the transmission 3 correspond to the number of rotations capable of starting the engine, and then the clutch 2 is gradually connected to the engine 1. At this time, by the controller 9, with respect to the motor generator 6, the number of rotations is controlled so that the number of rotations is constant.

If the clutch 2 is connected to the engine 1, the clutch 2 transmits torque to the engine 1 in order to rotate the engine 1. Then, when the number of rotations of the motor generator 6 is decreased and the number of rotations is controlled, the motor torque is increased. The increased motor torque becomes the same as a torque which is transmitted by the clutch 2. Here, by observing an increase of the motor torque in a procedure of connecting the clutch 2, a transmission torque of the clutch 2 (clutch transmission torque) with respect to the stroke amount (clutch stroke) of the clutch 2 can be learned.

An outline of a sequence of leaning the clutch transmission torque (clutch characteristic learning) is as follows.
(1) In order for the number of rotations of the input shaft 31 of the transmission 3 to become the number of rotations capable of starting the engine, the number of rotations of the motor generator 6 is controlled, and a motor torque M1 at this time is stored.
(2) The clutch stroke is controlled, and set to a stroke amount which is wanted to be learned.
(3) The an actual motor torque (Mx) when the clutch stroke reaches a stroke amount, which is a target, is stored.
(4) (2) and (3) are repeated, and the actual motor torque (Mx) in each case is stored.
(5) If the engine 1 starts to be rotated, the clutch stroke is maximized (the clutch 2 is completely connected), and learning is terminated.
(6) From the stored plurality of the actual motor torques Mx, a torque map, in which a relationship between the stroke amount of the clutch 2 and the clutch transmission torque is defined, is generated.

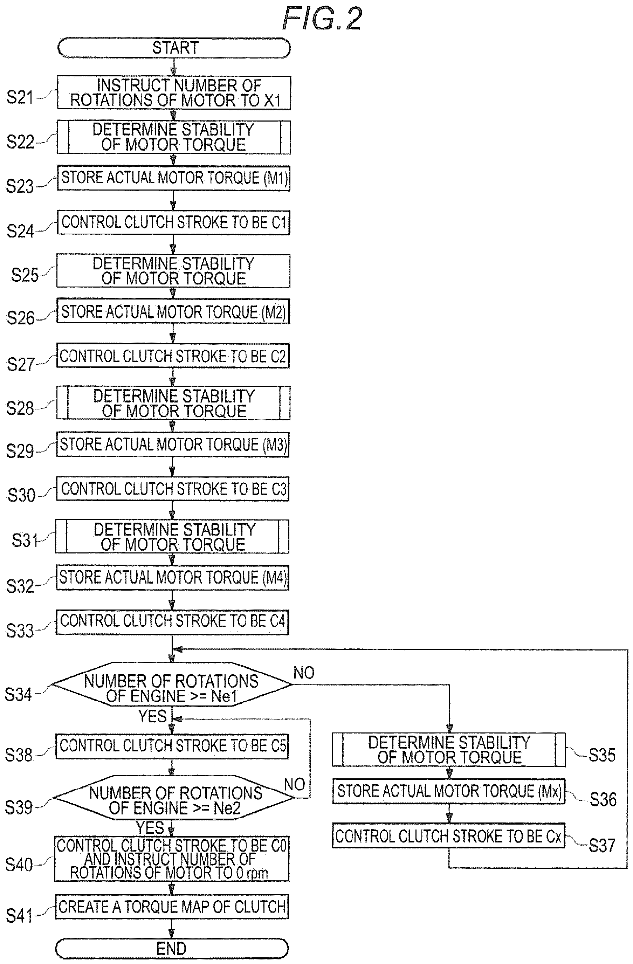

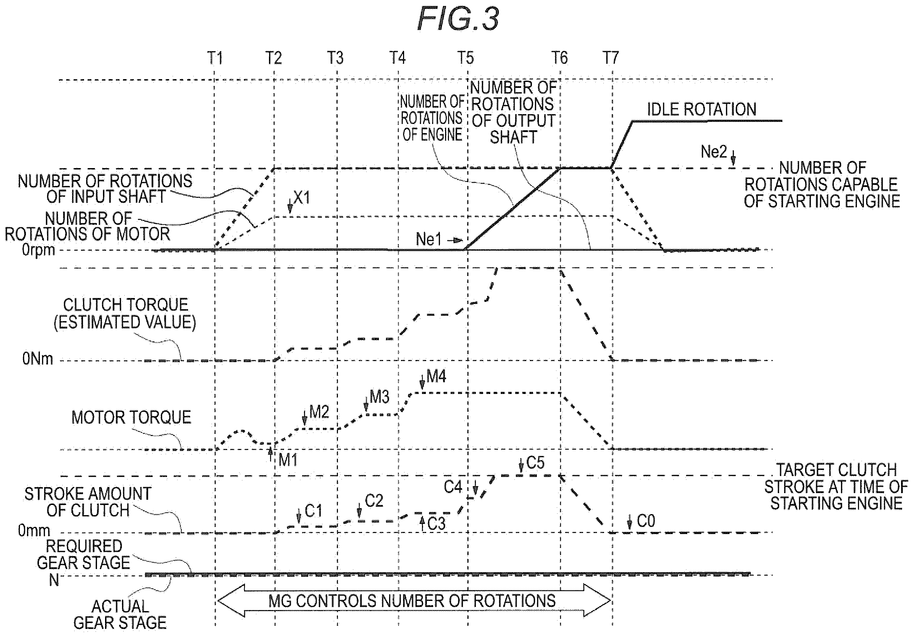

Hereinafter, learning of the clutch transmission torque is specifically described. Fig. 2 is a flow chart of clutch characteristic learning at the time of starting the engine. Fig. 3 is an example of a timing chart in a case of carrying out the flow chart of Fig. 2. The clutch characteristic learning is carried out by the controller 9. At this time, the controller 9 functions as a clutch characteristic learning apparatus. Also, the clutch characteristic learning apparatus may be provided separately from the controller 9.

In a state in which the engine 1 is stopped, if the engine 1 starts, the controller 9 initiates controlling the number of rotations in which the number of rotations of the motor generator 6 is maintained in X1 (Step S21). The X1 is the number of rotations of the motor generator 6 which is the number of rotations of the input shaft 31 capable of starting the engine. In the example of Fig. 3, instruction is carried out at a time T1, and the motor generator 6 initiates controlling of the number of rotations.

At this time, the second connecting section 64 is connected, the first connecting section 62 enters a non-connection state, and the motor torque enters a state of being transmitted to the input shaft 31 of the transmission 3. Accordingly, as illustrated in Fig. 3, if the number of rotations of the motor generator 6 increases, the number of rotations of the input shaft 31 of the transmission 3 along with that also increases. Moreover, since the clutch 2 is in a non-transmission state, the number of rotations of the crankshaft 11 of the engine 1 is set to zero. In addition, in the transmission 3, rotation of the input shaft 31 is not transmitted to the output shaft 32, and the number of rotations of the output shaft 32 is also set to zero.

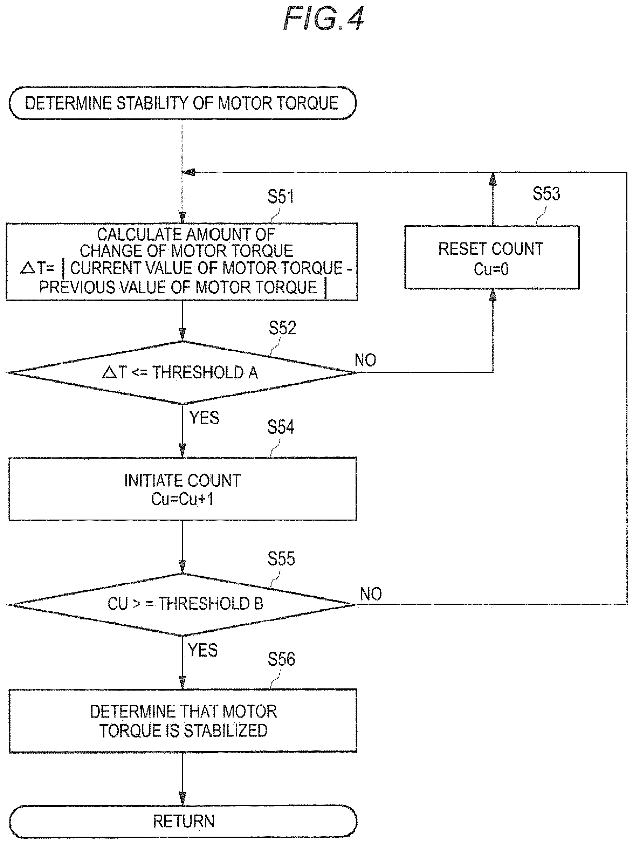

Next, the controller 9 determines (motor torque stability determination) whether or not the motor torque is stabilized (Step S22). Fig. 4 is a flow chart of a subroutine of the motor torque stability determination. The controller 9 estimates the motor torque. The motor torque is estimated from a value of a current which is output from the controller 9 with respect to the motor generator 6. That is, the controller 9 measures a value of a current output to the motor generator 6, or calculates a value of the motor torque estimated according to the value at a predetermined cycle.

The controller 9 calculates a difference between a value of a current motor torque and a value of a previous motor torque, that is, an amount of change ΔT of the motor torque (Step S51). In addition, the controller 9 determines whether or not the amount of change ΔT is a predetermined threshold A or less (Step S52). In a case in which the amount of change ΔT is not equal to or less than the threshold A (NO in Step S52), a counter Cu is reset (as Cu = 0) (Step S53), and Step S51 is repeated. In a case in which the amount of change ΔT is equal to or less than the threshold A (YES in Step S52), counting is initiated (Cu = Cu + 1) (Step S54).

If counting is initiated, the controller 9 determines whether or not a value of the counter Cu is equal to or more than a threshold B (Step S55). In a case in which a value of the counter Cu is less than the threshold B (NO in Step S55), a procedure returns to Step S51, and the amount of change ΔT is calculated. If the amount of change ΔT is equal to or less than the threshold A for times equal to or more than B times in succession (YES in Step S55), the controller 9 determines that the motor torque is stabilized (Step S56).

If the motor torque is determined to be stabilized, in the flow of Fig. 2, the subroutine of the motor torque stability determination of Step S22 is finished and, the controller 9 stores the actual motor torque at this time as the motor torque M1 (Step S23). In an example of Fig. 3, the motor torque is stabilized at a time T2, and the motor torque at this time is stored as the motor torque M1. Also, as illustrated in Fig. 3, the motor torque is stabilized in a state in which the clutch 2 is completely cut, that is, it means that the number of rotations of the motor generator 6 in which the number of rotations is controlled becomes the target value X1 so as to be stabilized.

If the number of rotations of the motor generator 6 is stabilized at the target value X1, the controller 9 initiates controlling of increasing the clutch stroke of the clutch 2 up to a stroke amount C1 (Step S24), and carries out the motor torque stability determination (Step S25). The subroutine of the motor torque stability determination is the same as described in Fig. 4. If the motor torque is determined to be stabilized, the controller 9 stores the actual motor torque at this time as a motor torque M2 (Step S26). In the example of Fig. 3, the motor torque is stabilized at a time T3, and the actual motor torque at this time is stored as the motor torque M2. Also, as illustrated in Fig. 3, the motor torque is stabilized in a state in which a target stroke amount of the clutch 2 is set to the C1, that is, it means that the stroke amount of the clutch 2 becomes the C1 and is stabilized.

If the stroke amount of the clutch 2 is stabilized at the C1, the controller 9 initiates controlling of an increase of the clutch stroke of the clutch 2 up to a stroke amount C2 (Step S27), and carries out the motor torque stability determination (Step S28). The subroutine of the motor torque stability determination is the same as described in Fig. 4. If the motor torque is determined to be stabilized, the controller 9 stores the actual motor torque at this time as a motor torque M3 (Step S29). In the example of Fig. 3, the motor torque is determined to be stabilized at a time T4, and the actual motor torque at this time is stored as the motor torque M3. Also, as illustrated in Fig. 3, the motor torque is stabilized in a state in which the target stroke amount of the clutch 2 is set to the C2, that is, it means that the stroke amount of the clutch 2 becomes the C2 and is stabilized.

If the stroke amount of the clutch 2 is stabilized at the C2, the controller 9 initiates controlling an increase of the clutch stroke of the clutch 2 up to a stroke amount C3 (Step S30), and carries out the motor torque stability determination (Step S31). The subroutine of the motor torque stability determination is the same as described in Fig. 4. If the motor torque is determined to be stabilized, the controller 9 stores the actual motor torque at this time as a motor torque M4 (Step S32). Also, as illustrated in Fig. 3, the motor torque is stabilized in a state in which the target stroke amount of the clutch 2 is set to the C3, that is, it means that the stroke amount of the clutch 2 becomes the C3 and is stabilized.

If the stroke amount of the clutch 2 is stabilized at the C3, the controller 9 initiates controlling of an increase of the clutch stroke of the clutch 2 up to a stroke amount C4 (Step S33), and determines whether or not the number of rotations of the crankshaft 11 of the engine 1 (the number of rotations of the engine) is equal to or more than a threshold Ne1 (Step S34). The threshold Ne1 may be a value which is capable of determining that the crankshaft 11 of the engine 1 is initiated to be rotated, and is set to a very small value compared to the number of rotations X1 capable of starting the engine 1. Also, in Step S33, instead of determining whether or not the number of rotations of the engine is equal to or more than the threshold Ne1, it may determine whether or not the number of rotations of the engine is greater than zero.

Even when the stroke amount is controlled to be set to the C4, in a case in which the number of rotations of the engine does not reach the threshold Ne1 (NO in Step S34), the motor torque stability determination is carried out (Step S35), and if the motor torque is stabilized, the actual motor torque at this time is stored as the motor torque M4 (Step S36), further, the clutch stroke is controlled to be set to a C5 (Step S37). After that, return to Step S34, it determines whether or not the number of rotations of the engine reaches the threshold Ne1. Until the number of rotations of the engine reaches the threshold Ne1, processes from Step S35 to Step S37 are repeated.

In the example of Fig. 3, the number of rotations of the engine 1 is determined to reach the threshold Ne1 at a time T5; however, in a case in which a temperature of the outside is low, a case in which the clutch disk 212 is worn out, or the like, even when the stroke amount is increased, the number of rotations of the engine 1 does not reach the threshold Ne1 without increasing the clutch transmission torque. For this reason, in Step S34, it determines whether or not the number of rotations of the engine 1 when the stroke amount is set to the C4 reaches the threshold Ne1. In a case that it does not reach, as described above, in order to further increase the stroke amount, the processes from Step S35 to Step S37 are carried out.

If the number of rotations of the engine reaches the threshold Ne1 (the crankshaft 11 of the engine 1 starts to be rotated) (YES in Step S34), the controller 9 initiates controlling of an increase of the clutch stroke up to a maximum Cmax (Step S38). Also, it determines whether or not the number of rotations of the engine reaches the number of rotations Ne2 capable of starting the engine (Step S39). Until the number of rotations of the engine reaches the number of rotations Ne2 capable of starting the engine (NO in Step S39), the target value of the clutch stroke is controlled to be set to the maximum value Cmax, and if the number of rotations of the engine reaches the number of rotations Ne2 capable of starting the engine (YES in Step S39), the controller 9 controls the clutch stroke to be a C0 being completely cut, and at the same time, the controller 9 controls the number of rotations of the motor to zero (Step S40). Also, the number of rotations Ne2 capable of starting the engine may be set to any one of values of, for example, 400 rpm to 500 rpm.

In the example of Fig. 3, the number of rotations of the engine reaches the number of rotations Ne2 of starting the engine at a time T6. Here, if the clutch 2 is cut and the clutch is completely cut at a time T7, the controller 9 starts the engine 1.

In addition, the controller 9 creates the torque map, in which a relationship between the stroke amount of the clutch 2 and the clutch transmission torque is illustrated, using the plurality of motor torques M1, M2, and ..., which are obtained by a series of controlling.

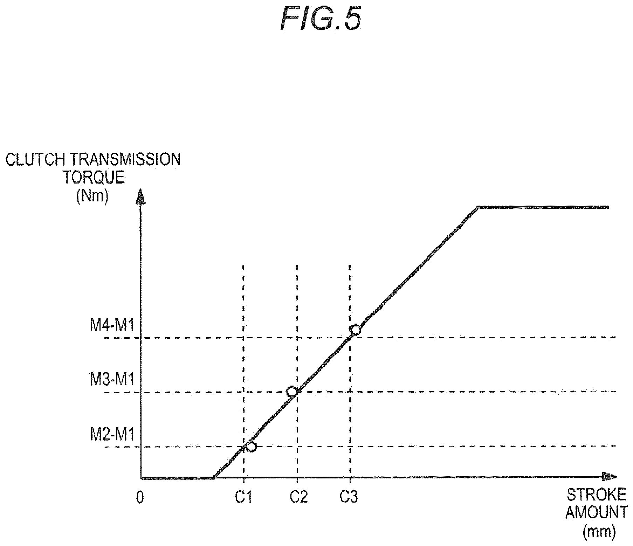

Fig. 5 is a graph illustrating an example of the torque map. A clutch transmission torque Tc in each stroke amount can be obtained as a value, which is obtained by subtracting the motor torque M1 from the actual motor torque in each stroke amount. That is, the clutch transmission torque Tc = the actual motor torque - the M1. In the example of Fig. 3, in the stroke amounts C1, C2, and C3 of the clutch 2, the actual motor torques M2, M3, and M4 are obtained, and three points of the clutch transmission torque in each stroke amount are obtained as M2 - M1, M3 - M1, and M4 - M1.

The torque map in which a relationship between the stroke amount and the clutch transmission torque is estimated is obtained by plotting these points to a graph of the stroke amount and the clutch transmission torque and interpolating between the points in an interpolation method such as linear interpolation. Also, regarding a part which cannot be learned, the same value as that of the previous time may be used.

The controller 9 updates the old torque map by the created torque map, and obtains a stroke amount necessary when a desired clutch torque is designated in travelling of the hybrid vehicle 100, with reference to a new updated torque map.

As described above, since the controller 9 as the clutch characteristic learning apparatus of the embodiment learns the clutch characteristic using the motor torque as the starter motor at the time of starting the engine, there is no room for generating leaking of a torque possibly generated in a case in which the clutch characteristic is learned during travelling. In addition, learning is carried out by starting the engine 1, and thus learning of the clutch characteristic and a chance to update the torque map are increased, and therefore, the torque map is frequently updated, so that deterioration of drivability caused by aging degradation of the clutch 2 can be suppressed.

In addition, according to the controller 9 of the embodiment, since the successive torque map as illustrated in Fig. 5 is obtained by interpolating, with respect to the clutch torque which is desired arbitrarily, when referring to the torque map, the stroke amount corresponding thereto can be obtained. Further, a value of a touch point where the clutch transmission torque rises can be obtained by interpolation.

Also, in the embodiment described above, the first shaft 61 of the motor generator 6 can be rotated and connected to the output shaft 32 of the transmission 3 through the first connecting section 62; however, it is not necessary to use the first shaft 61 and the first connecting section 62.

In addition, the controller 9 may be configured as a controller separately from targets to be controlled (engine 1, clutch 2, transmission 3, and the like), in this case, each controller may be connected to each other so as to be capable of being communicated with each other by a controller area network (CAN).

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Accordingly, it is expressly intended that all such variations, changes and equivalents which fall within the spirit and scope of the present invention as defined in the claims, be embraced thereby.

## Claims

1. A clutch characteristic learning apparatus of a hybrid vehicle (100) comprising:
an engine (1);
a clutch (2) that transmits an engine torque from the engine (1) as a clutch transmission torque according to a stroke amount of an operation member (215) with respect to an input shaft (31) of a transmission (3);
a motor generator (6) that is capable of outputting a motor torque to the input shaft (31) or an output shaft (32) of the transmission (3); and
a controller (9),
**characterized in that**
the controller (9) varies the stroke amount, in a state in which the motor torque is output to the input shaft side by the motor generator (6) and the input shaft (31) is controlled at a constant number of rotations by the motor generator (6), and generates a torque map indicating the relationship between the stroke amount of the operation member (215) and the clutch transmission torque, based on a relationship between the stroke amount when being varied and an amount of change of the motor torque, and
the controller (9) generates the torque map at the time of starting the engine (1), and changes the stroke amount so as to gradually output the engine torque to the input shaft (31).

2. The clutch characteristic learning apparatus according to claim 1,
wherein the controller (9) generates the torque map with a value which is obtained by subtracting the motor torque at the time of completely cutting the clutch from the motor torque corresponding to the stroke amount, as the transmission torque corresponding to the stroke amount.

3. The clutch characteristic learning apparatus according to claim 1 or 2,
wherein the controller (9) estimates the motor torques based on a current supplied to the motor generator (6).

4. The clutch characteristic learning apparatus according to any one of claims 1 to 3,
wherein the controller (9) generates the torque map by acquiring the motor torques regarding a plurality of predetermined stroke amounts and obtaining the transmission torques corresponding to the stroke amount for which the motor torque is not obtained by interpolation.

5. The clutch characteristic learning apparatus according to any one of claims 1 to 4,
wherein the controller (9) acquires the motor torques regarding the plurality of predetermined stroke amounts and adopts the motor torques regarding each of the plurality of predetermined stroke amounts for generating the torque map when the motor torques are stabilized.

## Patentansprüche

1. Kupplungscharakteristik-Lernvorrichtung eines Hybridfahrzeugs (100) mit:
einer Brennkraftmaschine (1);
einer Kupplung (2), die ein Brennkraftmaschinen-Drehmoment von der Brennkraftmaschine (1) als ein Kupplungsübertragungs-Drehmoment gemäß einem Betätigungsausmaß eines Betätigungsbauteils (215) bezüglich einer Eingangswelle (31) eines Getriebes (3) überträgt;
einem Motorgenerator (6), der dazu in der Lage ist, ein Motordrehmoment zu der Eingangswelle (31) oder einer Ausgangswelle (32) des Getriebes (3) auszugeben; und
einer Steuerung (9),
**dadurch gekennzeichnet, dass**
die Steuerung (9) das Betätigungsausmaß in einem Zustand, in dem das Motordrehmoment durch den Motorgenerator (6) zu der Eingangswellenseite ausgegeben wird und die Eingangswelle (31) durch den Motorgenerator (6) bei einer konstanten Drehzahl gesteuert wird, variiert und basierend auf einer Beziehung zwischen dem Betätigungsausmaß bei einer Variation und einem Ausmaß einer Änderung des Motordrehmoments ein Drehmomentkennfeld erzeugt, das die Beziehung zwischen dem Betätigungsausmaß des Betätigungsbauteils (215) und dem Getriebeübertragungs-Drehmoment angibt, und
die Steuerung (9) das Drehmomentkennfeld zum Zeitpunkt eines Starts der Brennkraftmaschine (1) erzeugt und das Betätigungsausmaß zum stufenweisen Ausgeben des Brennkraftmaschinen-Drehmoments zu der Eingangswelle (31) ändert.

2. Kupplungscharakteristik-Lernvorrichtung nach Anspruch 1,
bei der die Steuerung (9) das Drehmomentkennfeld mit einem Wert, der durch Subtrahieren des Motordrehmoments zum Zeitpunkt einer vollständigen Trennung der Kupplung von dem Motordrehmoment, das dem Betätigungsausmaß entspricht, erhalten wird, als das Übertragungsdrehmoment, das dem Betätigungsausmaß entspricht, erzeugt.

3. Kupplungscharakteristik-Lernvorrichtung nach Anspruch 1 oder 2,
bei der die Steuerung (9) das Motordrehmoment basierend auf einem dem Motorgenerator (6) zugeführten Strom abschätzt.

4. Kupplungscharakteristik-Lernvorrichtung nach einem der Ansprüche 1 bis 3,
bei der die Steuerung (9) das Drehmomentkennfeld durch Erfassen der Motordrehmomente in Bezug auf mehrere vorbestimmte Betätigungsausmaße und Erhalten der Übertragungsdrehmomente, die dem Betätigungsausmaß, für welches das Motordrehmoment nicht erhalten wird, entsprechen, durch Interpolation erzeugt.

5. Kupplungscharakteristik-Lernvorrichtung nach einem der Ansprüche 1 bis 4,
bei der die Steuerung (9) die Motordrehmomente bezüglich der mehreren vorbestimmten Betätigungsausmaße erfasst und die Motordrehmomente für jedes der mehreren vorbestimmten Betätigungsausmaße zum Erzeugen des Drehmomentkennfelds übernimmt, wenn die Motordrehmomente stabilisiert sind.

## Revendications

1. Appareil d'apprentissage de caractéristiques d'embrayage d'un véhicule hybride (100) comprenant :
un moteur (1) ;
un embrayage (2) qui transmet un couple moteur à partir du moteur (1) sous la forme d'un couple de transmission d'embrayage en fonction d'une quantité de course d'un élément d'actionnement (215) par rapport à un arbre d'entrée (31) d'une transmission (3) ;
un moteur générateur (6) qui est capable de transmettre un couple moteur à l'arbre d'entrée (31) ou à un arbre de sortie (32) de la transmission (3) ; et
un dispositif de commande (9),
**caractérisé en ce que**
le dispositif de commande (9) fait varier la quantité de course, dans un état dans lequel le couple moteur est transmis au côté d'arbre d'entrée par le moteur générateur (6) et l'arbre d'entrée (31) est commandé selon un nombre de rotations constant par le moteur générateur (6), et génère une carte de couple indiquant la relation entre la quantité de course de l'élément d'actionnement (215) et le couple de transmission d'embrayage, sur la base d'une relation entre la quantité de course lorsqu'elle est amenée à varier et une quantité de changement du couple moteur, et
le dispositif de commande (9) génère la carte de couple au moment du démarrage du moteur (1), et modifie la quantité de course de manière à transmettre progressivement le couple moteur à l'arbre d'entrée (31).

2. Appareil d'apprentissage de caractéristiques d'embrayage selon la revendication 1,
dans lequel le dispositif de commande (9) génère la carte de couple avec une valeur qui est obtenue par la soustraction du couple moteur au moment où l'embrayage est complètement coupé du couple moteur correspondant à la quantité de course, comme couple de transmission correspondant à la quantité de course.

3. Appareil d'apprentissage de caractéristiques d'embrayage selon la revendication 1 ou 2,
dans lequel le dispositif de commande (9) estime les couples moteurs sur la base d'un courant fourni au moteur générateur (6).

4. Appareil d'apprentissage de caractéristiques d'embrayage selon l'une quelconque des revendications 1 à 3,
dans lequel le dispositif de commande (9) génère la carte de couple par l'acquisition des couples moteurs concernant une pluralité de quantités de course prédéterminées et l'obtention des couples de transmission correspondant à la quantité de course pour laquelle le couple moteur n'est pas obtenu par interpolation.

5. Appareil d'apprentissage de caractéristiques d'embrayage selon l'une quelconque des revendications 1 à 4,
dans lequel le dispositif de commande (9) acquiert les couples moteurs concernant la pluralité de quantités de course prédéterminées et adopte les couples moteurs concernant chacune de la pluralité de quantités de course prédéterminées pour générer la carte de couple lorsque les couples moteurs sont stabilisés.
